# EUROPÄISCHE PATENTSCHRIFT

(11) **EP 1 663 444 B1**
(45) Veröffentlichungstag und Bekanntmachung des Hinweises auf die Patenterteilung: **31.10.2007**
(21) Anmeldenummer: 04764636.9
(22) Anmeldetag: 31.08.2004
(51) Int. Cl.: B01D 39/18

(54) **VERFAHREN ZUM HERSTELLEN EINES FILTERMATERIALS**
METHOD FOR PRODUCING A FILTER MATERIAL
PROCEDE POUR PRODUIRE UNE MATIERE DE FILTRAGE

(30) Priorität: 24.09.2003 DE 10346256
(43) Veröffentlichungstag der Anmeldung: 07.06.2006
(73) Patentinhaber: E. Begerow GmbH & Co., D-55450 Langenlonsheim (DE)
(72) Erfinder: BRANDT, Sigrid, 55595 Traisen (DE); GEIGER, Günther, 55593 Rüdesheim (DE); NARDO, Pierre, Louis, I-24020 Villa di Serio (IT)
(74) Vertreter: Bartels, Martin Erich Arthur
(86) Internationale Anmeldenummer: PCT/EP2004/009670
(87) Internationale Veröffentlichungsnummer: WO 2005/039737

(56) Entgegenhaltungen:
- DE-A- 10 044 218
- US-A- 5 462 801
- US-A- 5 597 619

## Beschreibung

Die Erfindung betrifft ein Verfahren zum Herstellen eines Filtermaterials, insbesondere in Form einer Tiefenfilterschicht, mit einer vorgebbaren Anzahl an nativen Fasern, wie solche aus Zellstoffmaterial und mit einem Gehalt an toxisch wirkenden oder die Toxizität begünstigenden Polysacchariden.

Im Stand der Technik sind Kieselgur-Stützschichten als Filtermaterial und Verfahren zu deren Herstellung bekannt. Zur Erhöhung der Nassfesteigenschaften und unter Vermeidung von Quelldehnungen bei der durch Anschwemmen von nativen Fasern und darauffolgendem Trocknen hergestellten und bei der Kieselgur-Anschwemmfiltration in Filterpressen Verwendung findenden Kieselgur-Stützschicht bestehen 20 bis 50 Gewichts-% bezogen auf die Gesamtfasermenge der Kieselgur-Stützschicht (trockengedacht) aus Polyolefinfasern mit einer Faserlänge von 0,8 bis 1,2 mm. Zur Herstellung der Kieselgur-Stützschicht werden die Polyolefinfasern der wässrigen Lösung aus nativen Fasern (Zellstoffasern) zugegeben, die Suspension aus dem Fasergemisch auf ein Siebband angeschwemmt und entwässert und die Schicht mit der Sinterungstemperatur der Polyolefinfasern getrocknet. Hierdurch ergibt sich eine Kieselgur-Stützschicht, die unter Vermeidung von nach geltenden Lebensmittelrecht unzulässigen Bindemitteln sowohl hervorragende Nassfesteigenschaften aufweist als auch praktisch frei ist von Quelldehnungen. Trotz dieser Vorteile ist die Oberflächenanbindung der Polyolefinfasern an die Kieselgur-Stützschicht reduziert, was die Stabilität sowie die Festigkeit und die Homogenität des Gesamt-Filtermaterials beeinträchtigt. Auch lassen sich gewünschte weitere Eigenschaften, wie Erhöhung der Nassfestigkeit oder der chemischen Beständigkeit, durch Einbringen von Zusatzmaterialien nur sehr eingeschränkt aufgrund des Grundstrukturaufbaues des bekannten Filtermaterials vornehmen.

Durch die DE 32 04 120 C2 ist eine poröse Stützschicht als Filtermaterial für einen durch Anschwemmen gebildeten Kieselgur-Filterkuchen bekannt, wobei native Fasern (Zellulose) und ein Verfestigungsmittel ein Fasergefüge bilden, das gegenüber zu filtrierenden Medien nassfest ist. Vorzugsweise besteht dabei das bekannte Filtermaterial aus 20 bis 50 Gewichts-% der Stützschicht, bezogen auf das trockene Fasergefüge, aus Polyolefinfasern mit einer Faserlänge von 0,8 bis 1,2 mm (Kurzstapelfaser), die sowohl miteinander als auch mit den nativen Fasern zusammengesintert sind. Um das dahingehend bekannte Filtermaterial herzustellen, wird eine wssrige Suspension aus nativen Fasern (Zellulose) und einem Verfestigungsmittel auf einem Siebband angeschwemmt zu einem schichtartigen Fasergefüge entwässert und das Fasergefüge anschließend einer Trocknung unterworfen, wobei bezogen auf das Trocknen des Fasergefüges 20 bis 50 Gewichts-% Polyolefinfasern mit der genannten Faserlänge der wässrigen Suspension zugegeben werden. Anschließend werden die Polyolefinfasern bei der Trocknung sowohl miteinander als auch mit den nativen Fasern gesintert, wobei die Trocknung mit einer Temperaturführung erfolgt, die die morphologische Struktur der Polyolefinfasern erhält.

Da bei der bekannten Lösung die eingesetzten Polyolefinfasern einen sehr niederen Schmelzpunkt aufweisen, ist während des Trocknungs- und Sinterverfahrens ein Durchschmelzen der Fasern möglich, so dass nicht an jeder Verbindungsstelle mit den nativen oder sonstigen Polyolefinfasern ein sicherer fester Verbund erreichbar ist.

Durch die DE 100 44 218 A1 ist ein nassfest ausgerüsteter Filter bekannt, insbesondere ein Tiefenfilter, mit hoher Quellfähigkeit, der als native Fasern eine Zellulosefasern enthaltende offenporige Hohlräume aufweisende Filtermatrix umfaßt, wobei die Zellulosefasern an ihrer Oberfläche chemisch gebundenes Polyisocyanat aufweisen. Da das Polyisocyanat chemisch in der Filtermatrix gebunden ist, ist der dahingehende nassfest ausgerüstete Filter insbesondere auch geeignet für die Verwendung in der Nahrungs-, Getränkemittel- und pharmazeutischen Industrie.

All diesen bekannten Filtermaterialien, insbesondere auch in der Form von Tiefenfilterschichten, ist gemeinsam, dass sie native Fasern, insbesondere in Form von Zellulosefasern, für den Grundmatrix-Aufbau verwenden. Durch den Einsatz von Zellstoff oder Zellstoffasern kann aber nicht ausgeschlossen werden, dass diese mit einem Schimmelpilz versehen sind, dessen Ausscheidungsprodukt toxisch wirkt, wobei die dahingehenden Ausscheidungsprodukte den Endotoxinen und Pyrogenen zuzurechnen sind. Die dahingehenden toxischen Ausscheidungsprodukte, insbesondere in Form der Endotoxine, gehören der Familie der Polysaccharide, insbesondere der Lipopolysaccharide, an. Neben den genannten Endotoxinen können die nativen Fasern (Zellstoff) sog. Glucane und Glucanverbindungen aufweisen, wobei neuere Untersuchungen gezeigt haben, dass die toxische Wirkung von Endotoxinen durch das Vorhandensein von Glucanen, insbesondere in Form von β-Glucanen, im Organismus noch verstärkt werden kann.

Ausgehend von diesem Stand der Technik liegt daher der Erfindung die Aufgabe zugrunde, ein Verfahren zum Herstellen eines Filtermaterials zu schaffen, das sicherstellt, dass die Toxizität von etwa vorhandenen Endotoxinen reduziert oder erst gar nicht vorhanden ist. Eine dahingehende Aufgabe löst ein Verfahren mit den Merkmalen des Patentanspruches 1 in seiner Gesamtheit.

Dadurch, dass gemäß dem kennzeichnenden Teil des Patentanspruches 1 durch Zugabe von spezifischen Enzymen das jeweilige Polysaccharid in ein nicht-toxisches Endprodukt oder ein solches mit geringer Toxizität umgewandelt wird, wird sichergestellt, dass abhängig vom eingesetzten Enzym die jeweilige (Lipo-)Polysaccharidkette an vorgebbaren Bindungsstellen aufgespalten und dergestalt zu nicht-toxischen oder wenig toxischen Endprodukten abgebaut wird. Zur Vermeidung oder zumindest zur Reduzierung des genannten Glucangehaltes in den bekannten Filtermaterialien ist erfindungsgemäß vorgesehen, mittels des Enzyms Glucanase die Polysaccharidkette des Glucans an der glycosidischen Bindung zu spalten, um dergestalt als unschädliches Abbau- oder Endprodukt Glucose (Zucker) zu erhalten. Insbesondere das häufig auftretende 1,3-β-D-Glucan läßt sich dergestalt durch 1,3-β-D-Glucanase abbauen. Das dahingehende Glucanase-Enzym wirkt als sog. Exoenzym vom Kettenende der Polysaccharidkette her; entsprechend modifizierte Glucanase oder andere Wirkstoffe erlauben aber auch gegebenenfalls als sog. Endoenzyme einen Angriff innerhalb der Polysaccharidkette, was mit einer erhöhten Aktivität und somit Schnelligkeit beim Abbau des 1,3-β-D-Glucans einhergeht.

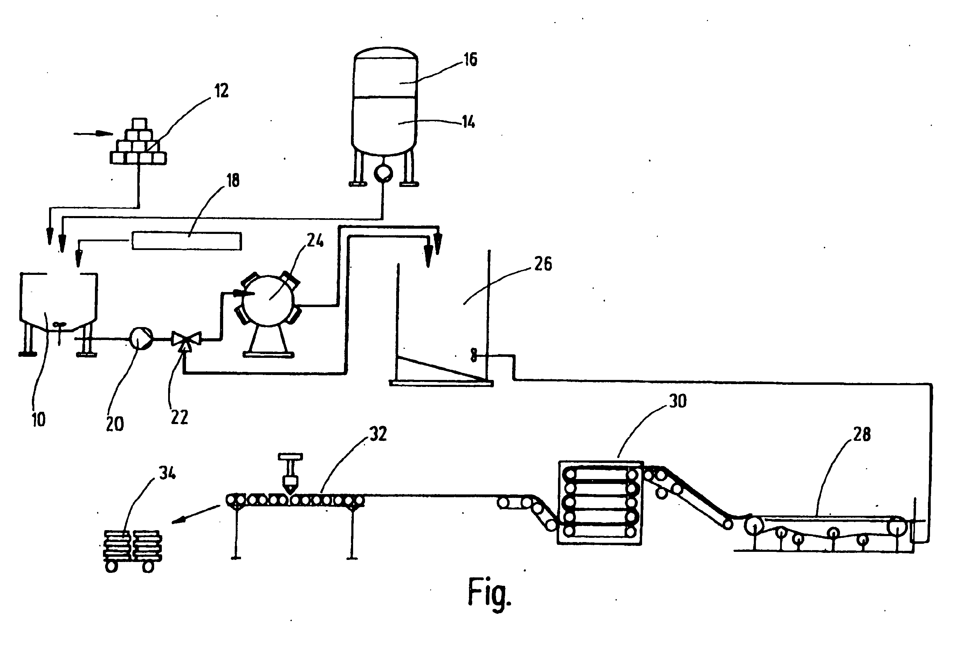

Im folgenden wird das erfindungsgemäße Verfahren anhand eines Ausführungsbeispiels nach der Zeichnung näher erläutert. Dabei zeigt in prinzipieller Darstellung in der Art eines Ablaufplanes die einzige Figur die wesentlichen Verfahrensschritte bezogen auf eine Herstellvorrichtung zum Aufbau des in Rede stehenden Filtermaterials als Fertigware.

In einen sog. Pulper 10 erfolgt ein Stoffeintrag in Form von Zellstoff 12 sowie von Wasser 14 aus einem entsprechenden Vorratstank 16. Hierdurch entsteht im Pulper 10 eine Zellstoffsuspension, wobei durch das Einbringen des Zellstoffes 12, wie eingangs dargelegt, in die Suspension auch Endotoxine, Pyrogene sowie β-Glucan und β-Glucan-Verbindungen mit eingebracht werden können. Durch die Zugabe eines Enzyms, symbolisch dargestellt als Block 18, lassen sich die (Lipo)-Polysaccharidketten an entsprechenden Bindungsstellen aufspalten und in nicht-toxische oder in der Toxizität reduzierte Endprodukte umwandeln. Insbesondere läßt sich das Polysaccharid 1,3- β-D-Glucan durch 1,3-β-D-Glucanase abbauen, indem die zugehörige Polysaccharidkette an der 1,3-β-D-glycosidischen Bindung unter Bildung letztendlich von Glucose (Zucker) gespalten wird. Der dahingehende Angriffsmechanismus erfolgt vom Kettenende her, also von der Wirkung her als exoenzymatischer Angriffsmechanismus. Dadurch, dass das β-Gluccan derart zu einem Zuckerwirkstoff aufgebaut wird, ist jedenfalls erreicht, dass eine normalerweise nicht-toxische Exposition von Endotoxinen keine tödliche Wirkung zeigen kann, was ansonsten bei Tierversuchen (Ratten) zu durchaus einer tödlichen Wirkung führen kann, nachdem die Versuchstiere vorher β-Glucanverbindungen ausgesetzt waren.

Die Konzentration des Enzymeinsatzes ist abhängig von der auftretenden Suspensionsmenge und beträgt regelmäßig zwischen 0,1g bis 50g pro 100kg Suspension. Je nach eingesetztem Enzym und Enzymaktivität kann die Reaktionszeit von 5 min bis 8 Std. dauern und als günstig haben sich Temperaturen von 10°C bis Inaktivierungstemperatur des verwendeten Enzyms, die regelmäßig bei 60°C bis 70°C liegt, erwiesen. Als pH-Wert-Einstellungen kommen Werte von pH 2 bis pH 11 in Frage, bevorzugt wird jedoch im sauren Bereich gearbeitet zwischen-pH 2,8 bis 6. Das Enzym 1,3-β-D-Glucanase ist unter den Markenbezeichnungen "SIHA Panzym Fino G" der Anmelderin Begerow zu erhalten. Ein anderer Anbieter, die Firma Novozymes, vertreibt ein vergleichbares Glucanase-Produkt unter der Markenbezeichnung "Glucanex".

Bei der genannten Zellstoffsuspension wird der Mahlgrad auf 18 % SR eingestellt, wobei durch das Mahlen an sich der Glucangehalt steigt bedingt durch den mechanischen Aufschluß sowie die Vergrößerung der wirksamen Oberfläche. Durch Wahl eines geeigneten Mahlgrades läßt sich also dergestalt die Wirksamkeit des Glucans einstellen und gegebenenfalls auch die Möglichkeit verbessern, durch die Vergrößerung der Oberfläche einen besseren Angriff für das Enzym Glucanase zu schaffen. Über eine Pumpe 20 und eine Ventilverteileinrichtung 22 wird die Suspension zumindest teilweise in einem sog. Refiner 24 mit weiteren Filtermaterialien, wie Kieselgur und/oder Perliten, versehen, um dergestalt den notwendigen Filtermaterialaufbau zu erhalten. Anschließend werden die über die Ventilverteileinrichtung 22 aufgeteilten Materialströme wiederum in einer Mischbütte 26 zusammengeführt und von dort aus zu einer Langsiebmaschine 28 gebracht, wo die eigentliche Filtermaterialherstellung durch Entwässern der Suspension nebst Blattbildung durchgeführt wird. Anschließend gelangt das derart hergestellte Filtermaterial in den Umlauftrockner 30 und von dort aus zu einer Formatschnitteinrichtung 32, wo die Blattbildung für das jeweilige Filtermaterial zur stapelbaren Fertigware 34 erfolgt. Da der Trockner 30 regelmäßig mit höheren Temperaturen als 60°C bis 70°C arbeitet, hat dies zur Folge, dass spätestens zu diesem Zeitpunkt der enzymatische Abbauprozeß gestoppt wird und insoweit die Polysaccharidaufspaltung ihren definitiven Abschluß findet.

Nachfolgend werden noch zwei Anwendungsbeispiele angegeben, die die Wirksamkeit des erfindungsgemäßen Verfahrens belegen. So wurden beim ersten Anwendungsbeispiel 10kg Langfasersulfatzellstoff in 90 kg Wasser zur Suspension aufgelöst und als Enzym wurden 10 g SIHA Panzym Fino G zugegeben. Anschließend erfolgte im Pulper 10 eine Bevorratung für 60 min. bei 30°C. Der vorher eingebrachte Glucangehalt reduzierte sich derart auf etwa 1/3 der vorangegangenen ermittelten Menge.
Als noch wirksamer zur Reduzierung des Glucangehaltes hat es sich erwiesen, die aus 90 kg Wasser und 10 kg Langfasersulfatzellstoff bestehende Suspension im Pulper 10 mit Phosphorsäure auf pH 4,5 anzusäuern. Als Gluconase-Enzym wurde 10 g Glucanex zugegeben. Bei einer Einstellung des Mahlgrades der Zellstoffsuspension auf 18° SR sowie Bevorratung im Pulper 10 bei 50°C für einen Zeitraum von 60 min. hat sich demgegenüber ein noch viel deutlicher reduzierter Glucangehalt im späteren Fertigprodukt der Filterware ergeben.

## Patentansprüche

1. Verfahren zum Herstellen eines Filtermaterials, insbesondere in Form einer Tiefenfilterschicht, mit einer vorgebbaren Anzahl an nativen Fasern, wie solche aus Zellstoffmaterial, und mit einem Gehalt an toxisch wirkenden oder die Toxizität begünstigenden Polysacchariden, die in einer Suspension vorliegen, bevor diese zum fertigen Filtermaterial weiterverarbeitet wird, wobei die Polysaccharide als Glucane vorliegen und das Glucan durch Zugabe von Glucanase zu Glucose als Endprodukt umgewandelt wird.

2. Verfahren nach Anspruch 1, **dadurch gekennzeichnet, dass** das Glucan ein 1,3-β-D-Glucan ist und als Glucanase 1,3- β-D-Glucanase eingesetzt wird.

3. Verfahren nach Anspruch 2, **dadurch gekennzeichnet, dass** unter dem Einfluß des Enzyms 1,3-β-D-Glucanase die Polysaccharidkette an der 1,3-β-D-glycosidischen Bindung unter Bildung der Glucose gespalten wird.

4. Verfahren nach einem der Ansprüche 1 bis 3, **dadurch gekennzeichnet, dass** Exoenzyme, wie Glucanase, eingesetzt werden, oder endoenzymatisch wirkende Stoffe und/oder Wirkverbindungen.

5. Verfahren nach einem der Ansprüche 1 bis 4, **dadurch gekennzeichnet, dass** 0,1 g bis 50 g Enzyme pro 100 kg Suspension eingesetzt werden bei einer Reaktionszeit von 5 min. bis 8 Std. und bei einer Temperatur von 10°C bis zur Inaktivierungstemperatur von ca. 60°C bis 70°C im vorzugsweise sauren Bereich von pH 2,8 bis 6.

6. Verfahren nach einem der Ansprüche 1 bis 5, **dadurch gekennzeichnet, dass** der Mahlgrad der Zellstoffsuspension auf 15° bis 80° SR, insbesondere auf 18° SR eingestellt wird.

7. Verfahren nach einem der Ansprüche 1 bis 6, **dadurch gekennzeichnet, dass** insbesondere Kieselgur und Perlite der Suspension zugegeben werden.

8. Verfahren nach einem der Ansprüche 1 bis 7, **dadurch gekennzeichnet, dass** spätestens nach Durchlaufen der Siebmaschine (28) in einem Trockner (30) für das Filtermaterial der enzymatische Abbau an Polysacchariden, insbesondere in Form von 1,3-β-D-Glucan beendet wird.

9. Verfahren nach Anspruch 8, **dadurch gekennzeichnet, dass** nach Durchlaufen des Trockners (30) das blattförmige Filtermaterial in vorgebbaren Formaten in einer Formatschnitteinrichtung (32) zugeschnitten wird.

10. Filtermaterial hergestellt nach einem der Ansprüche 1 bis 9, **dadurch gekennzeichnet, dass** durch Zugabe von spezifischen Enzymen im Filtermaterial vorhandene Polysaccharide in ein nicht-toxisches Endprodukt oder ein solches mit geringer Toxizität umgewandelt wird.

## Claims

1. Method for producing a filter material, in particular in the form of a depth filter layer, with a pre-determinable number of native fibres such as cellulose, and with a content of polysaccharides with a toxic effect or favouring toxicity, provided in a suspension before the same is processed to provide the finished product, whereby the polysaccharides are present as glucanes, and the glucane transformed into the end product by adding glucanase to the glucane.

2. Method according to Claim 1, **characterised in that** a 1,3-β-D-glucane is used as the glucane, and a 1,3-β-D-glucanase as the glucanase.

3. Method according to Claim 2, **characterised in that** 1,3-β-D-glucanase will split the polysaccharide chain at the 1,3-β-D-glycosidic connection point and form glucose under the influence of the enzyme.

4. Method according to one of the Claims 1 to 3, **characterised in that** exoenzymes such as glucanase are used, or endozymatically acting materials and/or active compounds.

5. Method according to one of the Claims 1 to 4, **characterised in that** 0.1g to 50g enzyme is used per 100kg suspension with a reaction period of 5 minutes to 8 hours and at a temperature of between 10°C and the inactivation temperature of approximately 60°C to 70°C, preferably within the acidic range of 2.8 to 6pH.

6. Method according to one of the Claims 1 to 5, **characterised in that** the grain grade of the cellulose suspension is set to 15° to 80° SR, in particular 18° SR.

7. Method according to one of the Claims 1 to 6, **characterised in that** diatomite and perlite in particular are added to the suspension.

8. Method according to one of the Claims 1 to 7, **characterised in that** the enzymatic breakdown of the polysaccharides, in particular in the form of 1,3-β-D-glucane is terminated in a dryer (30) following progress through the sieve machine (28) at the latest.

9. Method according to Claim 8, **characterised in that** the sheet-shaped filter material is cut into a pre-determinable format in a format cutting means (32) following progress through the dryer (30).

10. Filter material produced according to one of the Claims 1 to 9, **characterised in that** polysaccharides present in the filter material are transformed into a non-toxic end product, or one with low toxicity, by adding specific enzymes.

## Revendications

1. Procédé de production d'une matière filtrante, notamment sous la forme d'une couche de filtre à lit profond, comprenant un nombre pouvant être prescrit de fibres natives, comme celles en matière cellulosique, et ayant une teneur en polysaccharides toxiques ou favorisant la toxicité, qui sont présents en une suspension avant que celle-ci soit traitée davantage pour devenir une matière filtrante finie, les polysaccharides se présentant sous la forme de glucane et le glucane étant transformé par addition de glucanase en du glucose comme produit final.

2. Procédé suivant la revendication 1, **caractérisé en ce que** le glucane est un 1,3-β-D-glucane et on utilise de la 1,3-β-D-glucanase comme glucanase.

3. Procédé suivant la revendication 2, **caractérisé en ce que** sous l'influence de l'enzyme 1,3-β-D-glucanase les chaînes de polysaccharides sont coupées sur la liaison 1,3-β-D-glycosidique avec formation du glucose.

4. Procédé suivant l'une des revendications 1 à 3, **caractérisé en ce que** l'on utilise des exoenzymes comme des glucanases, ou des substances à action endoenzymatique et/ou des composés actifs.

5. Procédé suivant l'une des revendications 1 à 4, **caractérisé en ce que** l'on utilise de 0,1 g à 50 g d'enzyme par 100 kg de suspension pour une durée de réaction de 5 minutes à 8 heures et à une température de 10°C jusqu'à la température d'inactivation d'environ 60°C à 70°C, de préférence dans le domaine acide de pH de 2,8 à 6.

6. Procédé suivant l'une des revendications 1 à 5, **caractérisé en ce que** l'on règle le degré de broyage de la suspension de cellulose entre 15° et 80° de SR, notamment à 18° de SR.

7. Procédé suivant l'une des revendications 1 à 6, **caractérisé en ce que** l'on ajoute notamment de la terre de diatomée et de la perlite à la suspension.

8. Procédé suivant l'une des revendications 1 à 7, **caractérisé en ce qu'**au plus tard après la traversée de la machine (28) de tamisage on met fin dans un sécheur (30) de la matière filtrante à la décomposition enzymatique du polysaccharide, notamment sous la forme de 1, 3-β-D-glucane.

9. Procédé suivant la revendication 8, **caractérisé en ce qu'**après le passage dans le sécheur (30) on découpe la matière filtrante sous forme de feuille en des formats pouvant être prescrits dans un dispositif (32) de coupe au format.

10. Matière filtrante produite suivant l'une des revendications 1 à 9, **caractérisée en ce que** par addition d'enzymes spécifiques on transforme des polysaccharides présents dans la matière filtrante en un produit final non toxique ou en un produit de ce genre ayant une toxicité plus petite.
